# EUROPEAN PATENT APPLICATION

(11) **EP 4 693 804 A1**
(43) Date of publication of application: **11.02.2026**
(21) Application number: 24850507.5
(22) Date of filing: 20.03.2024
(51) Int. Cl.: H02J 7/00

(54) **CHARGING METHOD AND TERMINAL DEVICE**

(30) Priority: 07.08.2023 CN 202310985783
(71) Applicant: Huawei Technologies Co., Ltd., Shenzhen, Guangdong 518129 (CN)
(72) Inventor: YU, Wenchao, Shenzhen, Guangdong 518129 (CN); TANG, Jianhua, Shenzhen, Guangdong 518129 (CN); LIU, Xukun, Shenzhen, Guangdong 518129 (CN)
(74) Representative: MERH-IP Matias Erny Reichl Hoffmann Patentanwälte PartG mbB
(86) International application number: PCT/CN2024/082690
(87) International publication number: WO 2025/030848

(57) **Abstract**

Embodiments of this application provide a charging method. The method is used for a first terminal device to charge a second terminal device. The first terminal device includes a battery, a first switched-capacitor circuit, and a wired charging interface. The first switched-capacitor circuit is electrically connected between the battery and the wired charging interface. The wired charging interface is connected to the second terminal device through an OTG data cable. The method includes: in response to a user selecting a reverse charging mode of the first terminal device, determining that the first terminal device is a primary device that is in an OTG connection and that is configured to provide electric energy; and controlling the first switched-capacitor circuit to increase a first output voltage of the battery to a second output voltage and output the second output voltage to the wired charging interface, to transmit the second output voltage to the second terminal device through the OTG data cable. The charging method provided in this application can increase a charging power of reverse charging, improve reverse charging efficiency, and alleviate a problem of heat generation during reverse charging.

## Description

This application claims priority to Chinese Patent Application No. 202310985783.2, filed with the China National Intellectual Property Administration on August 7, 2023 and entitled "CHARGING METHOD AND TERMINAL DEVICE", which is incorporated herein by reference in its entirety.

### TECHNICAL FIELD

Embodiments of this application relate to the field of charging technologies, and more specifically, to a charging method and a terminal device.

### BACKGROUND

OTG, an abbreviation for on-the-go, is a universal serial bus (universal serial bus, USB) interface technology that can implement direct connections and data transmission between devices. An OTG interface allows an OTG-supported device (for example, a terminal device such as a smartphone or a tablet computer) to serve as a host end and connect to another USB device (for example, a flash drive (USB flash drive), a keyboard, a mouse, or a terminal device) serving as a secondary device end, to implement functions such as data transmission and file sharing. In addition, the OTG interface may further cause the device serving as the host end to supply power to another device through a USB OTG cable, to implement wired reverse charging.

Currently, in a wired reverse charging process of an electronic device such as a smartphone or a tablet computer, due to power and temperature limitations of elements such as a buck charging chip and an inductor in a charging circuit, a power of wired reverse charging is low and is generally not higher than 7.5 W. In addition, reverse charging efficiency is low and is generally lower than 90%, resulting in significant heat generation during wired reverse charging.

### SUMMARY

Embodiments of this application provide a charging method and a terminal device, to increase a charging power of wired reverse charging, improve reverse charging efficiency, and alleviate a problem of heat generation during wired reverse charging.

According to a first aspect, a charging method is provided. The method is used for a first terminal device to charge a second terminal device. The first terminal device includes a battery, a first switched-capacitor circuit, and a wired charging interface. The first switched-capacitor circuit is electrically connected between the battery and the wired charging interface. The wired charging interface is connected to the second terminal device through an OTG data cable. The method includes: in response to a user selecting a reverse charging mode of the first terminal device, determining that the first terminal device is a primary device that is in an OTG connection and that is configured to provide electric energy; and controlling the first switched-capacitor circuit to increase a first output voltage of the battery to a second output voltage and output the second output voltage to the wired charging interface, to transmit the second output voltage to the second terminal device through the OTG data cable.

In some possible implementations, the first switched-capacitor circuit includes a charge pump circuit, the first terminal device further includes a first control circuit, and the first control circuit is configured to control a conduction/cut-off state of one or more transistors in the charge pump circuit.

In this embodiment of this application, the first switched-capacitor circuit is used as a boost circuit during reverse charging. In comparison with a boost circuit, the first switched-capacitor has a larger boost range and higher conversion efficiency, so that the terminal device has a higher power of reverse charging and alleviates a problem of heat generation.

In some possible implementations, the first terminal device further includes a mode switching control circuit, the mode switching control circuit is configured to switch a working mode of the first switched-capacitor circuit, the working mode of the first switched-capacitor circuit includes a buck mode or a boost mode, an output of the first switched-capacitor circuit in the buck mode is the battery to implement forward charging, and an input of the first switched-capacitor circuit in the boost mode is the battery to implement reverse charging. Controlling the first switched-capacitor circuit to increase the first output voltage of the battery to the second output voltage includes: determining that a working status of the battery is a discharging state; and controlling the mode switching control circuit to determine that an input of the first switched-capacitor circuit is the battery and an output is the wired charging interface, to make the first switched-capacitor circuit switch from the buck mode to the boost mode, to increase the first output voltage of the battery to the second output voltage.

In some possible implementations, the mode switching control circuit and the first switched-capacitor circuit are integrated into a first switched-capacitor chip. Controlling the mode switching control circuit, to make the first switched-capacitor circuit switch from the buck mode to the boost mode includes: controlling the mode switching control circuit in the first switched-capacitor chip, to switch a working mode of the first switched-capacitor chip from a forward charging mode to a reverse charging mode, where the first switched-capacitor circuit is in the buck mode when the first switched-capacitor chip is in the forward charging mode, and the first switched-capacitor circuit is in the boost mode when the first switched-capacitor chip is in the reverse charging mode.

In this embodiment of this application, the mode switching circuit is used to quickly switch the working mode of the first switched-capacitor or the first switched-capacitor chip, to quickly switch between a forward charging mode and a reverse charging mode of the terminal device, and reduce occupied space in the terminal device.

In some possible implementations, the first terminal device is further provided with a first charging switching circuit and a first integrated circuit, the first integrated circuit and the first switched-capacitor circuit are connected in parallel between the battery and the wired charging interface, the first charging switching circuit is configured to connect one of the first integrated circuit and the first switched-capacitor circuit, and the first integrated circuit is configured to perform forward charging on the first terminal device. After determining that the first terminal device is the primary device that is in the OTG connection and that is configured to provide electric energy, the method further includes: controlling the first charging switching circuit to disconnect the first integrated circuit and connect the first switched-capacitor circuit, to make the first terminal device switch from performing forward charging by using the first integrated circuit to performing reverse charging by using the first switched-capacitor circuit.

In this embodiment of this application, the first charging switching circuit is used to switch between two charging branches, to switch between the forward charging mode and the reverse charging mode of the terminal device.

In some possible implementations, the first terminal device is further provided with a first boost (boost) circuit, and the first boost circuit and the first switched-capacitor circuit are connected in parallel between the battery and the wired charging interface. Before controlling the first switched-capacitor circuit to increase the first output voltage of the battery to the second output voltage, the method further includes: controlling the first boost circuit to increase the first output voltage to a third output voltage and output the third output voltage to the wired charging interface, where the third output voltage is lower than the second output voltage. Controlling the first switched-capacitor circuit to increase the first output voltage of the battery to the second output voltage includes: when it is determined that the second terminal device supports a charging voltage to be the second output voltage, controlling the first switched-capacitor circuit to increase the first output voltage of the battery to the second output voltage.

In this embodiment of this application, in a process of a handshake between the first terminal device and the second terminal device, the first boost circuit is used to perform reverse charging in advance, until it is determined that the second terminal device can support the second output voltage. This improves reverse charging efficiency.

In some possible implementations, the first boost circuit is provided with a boost protection circuit, and when the first terminal device switches from performing reverse charging by using the first boost circuit to performing reverse charging by using the first switched-capacitor circuit, the boost protection circuit is configured to protect the first boost circuit in a switching process.

In this embodiment of this application, the boost protection circuit is used to prevent the first boost circuit from being burnt, to ensure reverse charging efficiency.

In some possible implementations, the boost protection circuit includes any one or more of a metal-oxide-semiconductor MOS field-effect transistor, a diode, a triode, and a resistor.

In some possible implementations, a ratio of the second output voltage to the first output voltage is any one or more of 4:1, 3:1, and 2:1.

In some possible implementations, the first terminal device identifies the second terminal device by using any one or more of a power delivery PD protocol, a quick charge QC protocol, and a battery charging BC protocol.

In some possible implementations, the method further includes: obtaining battery level information of the first terminal device or the second terminal device; and determining the second output voltage based on the battery level information of the first terminal device or the second terminal device.

According to a second aspect, a terminal device is provided. The terminal device includes: a battery; a wired charging interface, where the wired charging interface is connected to another terminal device through an OTG data cable; a first switched-capacitor circuit, where the first switched-capacitor circuit is electrically connected between the battery and the wired charging interface; and a control module, configured to: in response to a user selecting a reverse charging mode of the first terminal device, determine that the first terminal device is a primary device that is in an OTG connection and that is configured to provide electric energy, and control the first switched-capacitor circuit to increase a first output voltage of the battery to a second output voltage and output the second output voltage to the wired charging interface, to transmit the second output voltage to the another terminal device through the OTG data cable.

In some possible implementations, the first switched-capacitor circuit includes a charge pump circuit, the control module includes a first control circuit, and the first control circuit is configured to control a conduction/cut-off state of one or more transistors in the charge pump circuit.

In some possible implementations, the terminal device further includes: a mode switching control circuit, where the mode switching control circuit is configured to switch a working mode of the first switched-capacitor circuit, the working mode of the first switched-capacitor circuit includes a buck mode or a boost mode, the first switched-capacitor circuit in the buck mode is configured to output a power supply voltage to the battery to implement forward charging, and the first switched-capacitor circuit in the boost mode is configured to receive a power supply voltage from the battery to implement reverse charging. The control module is specifically configured to: determine that a working status of the battery is a discharging state; and control the mode switching control circuit to determine that an input of the first switched-capacitor circuit is the battery and an output is the wired charging interface, to make the first switched-capacitor circuit switch from the buck mode to the boost mode, to increase the first output voltage of the battery to the second output voltage.

In some possible implementations, the terminal device includes: a first switched-capacitor chip, where the first switched-capacitor chip includes the first switched-capacitor circuit and the mode switching control circuit. The control module is specifically configured to: control the mode switching control circuit in the first switched-capacitor chip, to switch a working mode of the first switched-capacitor chip from a forward charging mode to a reverse charging mode, to make the first switched-capacitor chip increase the first output voltage of the battery to the second output voltage, where the first switched-capacitor circuit is in the buck mode when the first switched-capacitor chip is in the forward charging mode, and the first switched-capacitor circuit is in the boost mode when the first switched-capacitor chip is in the reverse charging mode.

In some possible implementations, the terminal device further includes: a first integrated circuit, where the first integrated circuit and the first switched-capacitor circuit are connected in parallel between the battery and the wired charging interface, and the first integrated circuit is configured to perform forward charging on the first terminal device; and a first charging switching circuit, where the first charging switching circuit is configured to connect one of the first integrated circuit and the first switched-capacitor circuit. The control module is further configured to: control the first charging switching circuit to disconnect the first integrated circuit and connect the first switched-capacitor circuit, to make the first terminal device switch from performing forward charging by using the first integrated circuit to performing reverse charging by using the first switched-capacitor circuit.

In some possible implementations, the terminal device further includes: a first boost (boost) circuit, where the first boost circuit and the first switched-capacitor circuit are connected in parallel between the battery and the wired charging interface. Before the control module controls the first switched-capacitor circuit to increase the first output voltage of the battery to the second output voltage, the control module is further configured to: control the first boost circuit to increase the first output voltage to a third output voltage and output the third output voltage to the wired charging interface, where the third output voltage is lower than the second output voltage. The control module is specifically configured to: when it is determined that the another terminal device supports a charging voltage to be the second output voltage, control the first switched-capacitor circuit to increase the first output voltage of the battery to the second output voltage.

In some possible implementations, the first boost circuit is provided with a boost protection circuit, and when the terminal device switches from performing reverse charging by using the first boost circuit to performing reverse charging by using the first switched-capacitor circuit, the boost protection circuit is configured to protect the first boost circuit in a switching process.

In some possible implementations, the boost protection circuit includes any one or more of a metal-oxide-semiconductor MOS field-effect transistor, a diode, a triode, and a resistor.

In some possible implementations, a ratio of the second output voltage to the first output voltage is any one or more of 4:1, 3:1, and 2:1.

In some possible implementations, the terminal device identifies the another terminal device by using any one or more of a power delivery PD protocol, a quick charge QC protocol, and a battery charging BC protocol.

In some possible implementations, the control module is further configured to: obtain battery level information of the terminal device or the another terminal device, and determine the second output voltage based on the battery level information of the terminal device or the another terminal device.

According to a third aspect, a terminal device is provided, including a processor, a memory, and a transceiver. The memory is configured to store a computer program, and the processor is configured to invoke and run the computer program stored in the memory, to perform the method according to the first aspect or any one of the possible implementations of the first aspect.

According to a fourth aspect, a chip is provided. The chip obtains instructions and executes the instructions to implement the method according to the first aspect or any one of the possible implementations of the first aspect.

Optionally, in an implementation, the chip includes a processor and a data interface. The processor reads, through the data interface, instructions stored in a memory, to perform the method according to the first aspect or any one of the possible implementations of the first aspect.

Optionally, in an implementation, the chip may further include a memory. The memory stores instructions. The processor is configured to execute the instructions stored in the memory. When the instructions are executed, the processor is configured to perform the method according to the first aspect or any one of the possible implementations of the first aspect.

According to a fifth aspect, a computer program product including instructions is provided. When the instructions are run by a computing device or a computing device cluster, the computing device or the computing device cluster is enabled to perform the method according to the first aspect or any one of the possible implementations of the first aspect.

According to a sixth aspect, a computer-readable storage medium is provided, including computer program instructions. When the computer instructions are executed by a computing device or a computing device cluster, the computing device or the computing device cluster is enabled to perform the method according to the first aspect or any one of the possible implementations of the first aspect.

In an example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard drive).

Optionally, in an implementation, the foregoing storage medium may be specifically a nonvolatile storage medium.

### BRIEF DESCRIPTION OF DRAWINGS

FIG. 1 is a block diagram of an OTG connection according to an embodiment of this application;
FIG. 2 is a block diagram of an operation interface according to an embodiment of this application;
FIG. 3 is a block diagram of a reverse charging system according to an embodiment of this application;
FIG. 4 is a block diagram of a charging method according to an embodiment of this application;
FIG. 5 is a schematic of a first switched-capacitor circuit according to an embodiment of this application;
FIG. 6 is a block diagram of a mode switching control circuit according to an embodiment of this application;
FIG. 7 is a block diagram of a charging circuit for implementing reverse charging and forward charging according to an embodiment of this application;
FIG. 8 is a block diagram in which terminal devices perform a handshake by using a reverse charging protocol according to an embodiment of this application;
FIG. 9 is a block diagram of another charging circuit according to an embodiment of this application;
FIG. 10 is a schematic of a boost protection circuit according to an embodiment of this application;
FIG. 11 is a diagram of a terminal device according to an embodiment of this application; and
FIG. 12 is a diagram of another terminal device according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

Unless otherwise stated, meanings of all technical and scientific terms used in embodiments of this application are the same as those usually understood by a person skilled in the technical field of this application. The terms used in this application are merely intended to describe specific embodiments, and are not intended to limit the scope of this application.

It should be understood that, in embodiments of this application, sequence numbers of processes do not mean a performing sequence. The sequence of performing the processes should be determined based on functions and internal logic of the processes, and shall not constitute any limitation on an implementation process of embodiments of this application.

In addition, in embodiments of this application, an expression such as "example" or "for example" represents giving an example, an illustration, or a description. Any embodiment or design scheme described as an "example" in this application shall not be explained as being more preferred or having more advantages than another embodiment or design scheme. Exactly, use of the expression "example" is intended to present a concept in a specific manner.

In embodiments of this application, "relevant (corresponding, relevant)" and "corresponding (corresponding)" may be interchangeably used sometimes. It should be noted that meanings expressed by the expressions are consistent when a difference between the expressions is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

For ease of understanding the technical solutions in this application, the following briefly describes technical terms mentioned in this application.

### 1. OTG

OTG, an abbreviation for on-the-go, is a universal serial bus (universal serial bus, USB) interface technology that can implement direct connections and data transmission between devices. An OTG interface allows an OTG-supported device (for example, a terminal device such as a smartphone or a tablet computer) to serve as a host end and connect to another USB device (for example, a flash drive (USB flash drive), a keyboard, a mouse, or a terminal device) serving as a secondary device end, to implement functions such as data transmission and file sharing.

The OTG technology allows data transmission between devices without a host (Host). For example, a digital camera is directly connected to a printer, and USB interfaces of the two devices are connected by using the OTG technology, to print a shot photo immediately; or data in the digital camera may be sent to a removable hard disk with a USB interface by using the OTG. With the OTG technology, USB interface accessories can be added to smart terminals to enrich functions of the smart terminal devices.

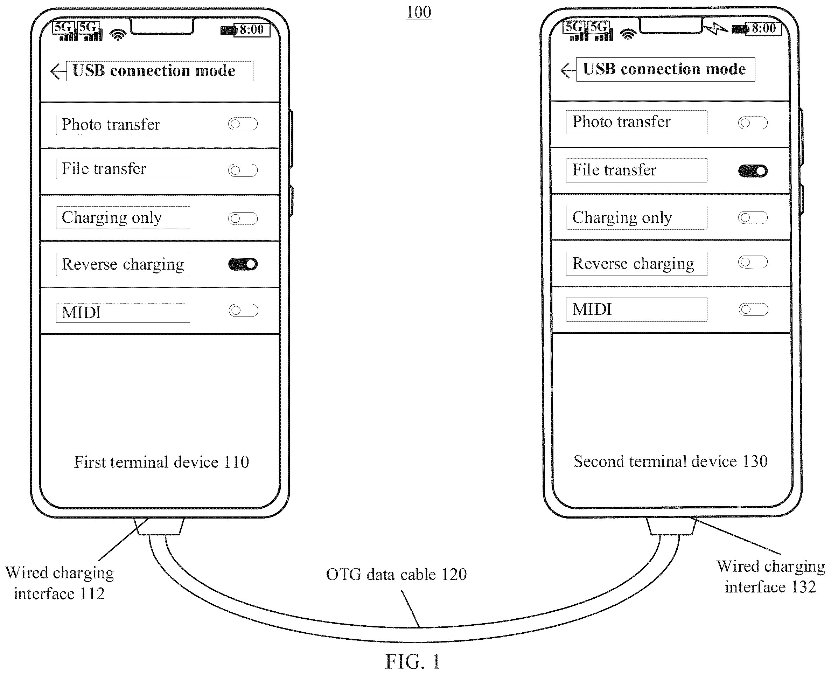

FIG. 1 is a diagram 100 of an OTG connection. As shown in FIG. 1, a wired charging interface 112 of a first terminal device 110 is connected to a wired charging interface 132 of a second terminal device 130 through an OTG data cable 120. In this case, the first terminal device 110 may serve as a primary device in the OTG connection and is responsible for data transmission, device management, power supply, and the like, and the second terminal device 130 may serve as a secondary device in the OTG connection and is responsible for passively receiving an instruction of the primary device and performing an operation corresponding to the instruction. In a process in which the first terminal device 110 is connected to the second terminal device 120 through the OTG data cable 120, the first terminal device 110 sends a request to the second terminal device 120, to query whether the second terminal device 130 supports an OTG function. If the OTG function is supported, the first terminal device 110 switches to a primary device mode to supply power to the second terminal device 130. In some embodiments, the wired charging interface 112 and the wired charging interface 132 include but are not limited to a mini USB interface, a micro USB interface, a Dock interface, a Lightning interface, or a Type-C interface.

As shown by a charging icon in an upper right corner of the second terminal device 130 in FIG. 1, in embodiments of this application, an OTG interface may cause the first terminal device 110 serving as the primary device to supply power to the second terminal device 130 through the OTG data cable 120, to implement wired reverse charging.

### 2. Reverse charging

Reverse charging means that the first terminal device 110 may be used as a power supply to charge the second terminal device 130. For example, charging is performed through a wired OTG data cable, or wireless reverse charging is performed by using an electromagnetic wave emitted by a wireless coil in a terminal device. Correspondingly, forward charging means supplying power to a terminal device by using a wired or wireless charger.

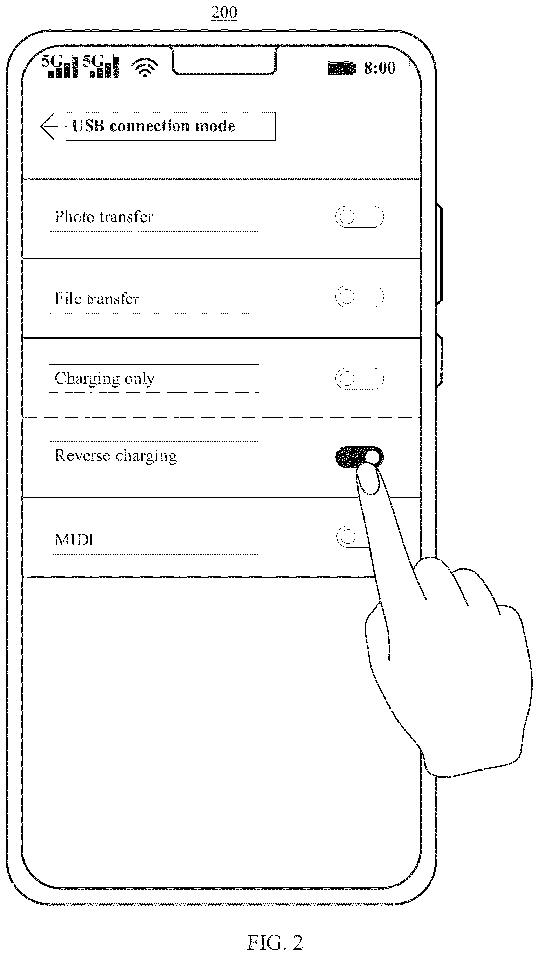

In embodiments of this application, a user may select a working mode of the first terminal device in a user interface of the first terminal device 110, to implement power supply by the first terminal device 110. FIG. 2 is a diagram of an operation interface 200. As shown in FIG. 2, in response to the user selecting a USB connection mode in the user interface 200, the first terminal device 110 determines a working mode of the first terminal device. For example, if the user selects a "Charging only" option in the USB connection mode, the first terminal device 110 may serve as a power receiving end and receive electric energy provided by a charger or another terminal device; or if the user selects a "Reverse charging" option in the USB connection mode, the first terminal device may serve as a power supply end and provide electric energy to the second terminal device or another terminal device. In some other embodiments of this application, after the user selects the "Reverse charging" option, the first terminal device may further prompt the user to select or adjust a power supply strategy, for example, set a battery level limit for starting reverse charging or a battery level limit for ending reverse charging. When the first terminal device 110 is connected to the second terminal device 130 through the OTG data cable 120, user interfaces of the first terminal device 110 and the second terminal device 130 may simultaneously display working modes shown in FIG. 2 for the user to select. Alternatively, the user may select a working mode shown in FIG. 2 in setting options in user interfaces of the first terminal device 110 and the second terminal device 130.

In some other embodiments of this application, the user may select a "Reverse charging" option in a user interface of the second terminal device 130, and select an option such as "Charging only" in a user interface of the first terminal device 110. In this case, the second terminal device 130 may serve as a power supply end and provide electric energy to the first terminal device 110 serving as a power receiving end. For example, when the first terminal device 110 provides electric energy to the second terminal device 130 and the user needs to change a power supply end and a power receiving end, the user may first change a "Reverse charging" option to a "Charging only" option in a user interface of the first terminal device 110, and then change a "Charging only" option to a "Reverse charging" option in a user interface of the second terminal device 130. In other words, the user may select any terminal device at two ends of an OTG connection cable as a power supply end, that is, select or change a "Reverse charging" or "Charging only" option in a user interface of the terminal device, to select or switch between a power supply end and a power receiving end in reverse charging between any terminal devices.

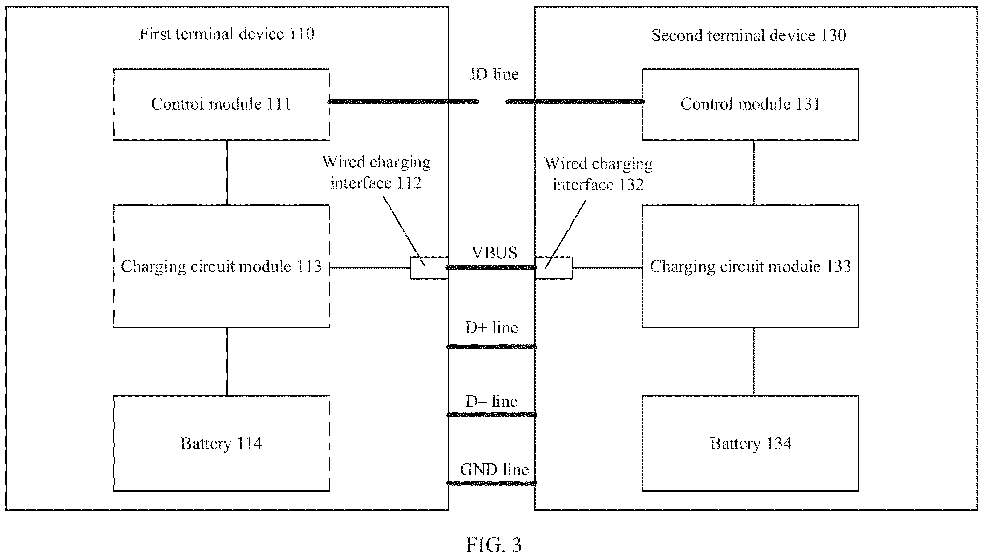

FIG. 3 is a block diagram of a reverse charging system 300. A diagram of an internal system architecture of a first terminal device 110 and a second terminal device 130 is shown.

As shown in FIG. 3, an OTG data cable in embodiments of this application includes a voltage bus (voltage bus, VBUS), a D+ line (which may also be referred to as a data positive line or a data positive line), a D- line (which may also be referred to as a data minus line or a data minus line), an identification (identification, ID) line (which may also be referred to as a configuration channel (configuration channel, CC) line), and a ground (ground, GND) line. The D+ line and the D- line may be used for data transmission.

As shown in FIG. 3, the first terminal device 110 and the second terminal device 130 in FIG. 3 include a control module 111 and a control module 131 respectively. The control module may be configured to implement various functions for the terminal device, for example, configured to process a communication protocol and communication data, or configured to control the entire terminal device, execute a software program, and process data of the software program, or configured to assist in completing a computing processing task, for example, image processing or audio processing.

As shown in FIG. 3, the first terminal device 110 further includes a charging circuit module 113 and a battery 114, and the second terminal device 130 further includes a charging circuit module 133 and a battery 134. The charging circuit module includes a charging circuit. The charging circuit is configured to output a power supply signal to the battery during forward charging, or is configured to receive a power supply signal of the battery and output the power supply signal to a wired charging interface during reverse charging. For example, the control module 131 may send an output instruction to the charging circuit module 133 to determine that an input of the charging circuit module is an external power supply signal and an output is the battery, to instruct the charging circuit in the charging circuit module to output a power supply signal (for example, a power supply signal with a voltage of 4.5 V and a current of 1.5 A) to the battery. For another example, the control module 111 may send an input instruction to the charging circuit module 113, to instruct the charging circuit in the charging circuit module to receive a power supply signal of the battery, amplify the power supply signal, and transmit an amplified power supply signal to a wired charging interface 112. In embodiments of this application, the charging circuit module may alternatively be a charging chip, for example, a buck charging chip or a switched-capacitor chip.

The first terminal device is used as an example. When the first terminal device 110 performs reverse charging on the second terminal device 130, the control module 111 may send an input instruction to the charging circuit module 113, to instruct the charging circuit in the charging circuit module to receive a power supply signal of the battery 114, amplify the power supply signal, and transmit an amplified power supply signal to the wired charging interface 112. For another example, if the wired charging interface 112 of the first terminal device 110 is connected to a charger, the control module 111 may send an output instruction to the charging circuit module 113 to determine that an input of the charging circuit module is an external power supply signal and an output is the battery, to instruct the charging circuit in the charging circuit module to output a power supply signal (for example, a power supply signal with a voltage of 4.5 V and a current of 1.5 A) to the battery 114.

Refer to FIG. 3. The charging circuit module 113 is connected to the charging circuit module 133 through a VBUS, and the VBUS is configured to transmit a power supply voltage. In other words, if the first terminal device is a power supply end, the battery 114 outputs a power supply voltage to the charging circuit module 113, the charging circuit module 113 transmits the power supply voltage to the charging circuit module 133 through the VBUS, and the power supply voltage is output to the battery 134.

It should be noted that FIG. 3 is merely a diagram of a reverse charging system according to an embodiment of this application, and devices, components, modules, and the like shown in the figure do not constitute any limitation. For example, the first terminal device and the second terminal device in the reverse charging system each may further include a USB PHY module and are connected through a D+ line and a D- line, for lower-layer signal conversion. For another example, the first terminal device and the second terminal device in the reverse charging system each may further include a reverse charging protocol module, configured to match reverse charging voltages of the first terminal device and the second terminal device.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, another processing device connected to a wireless modem, a vehicle-mounted device, a vehicle-mounted communication apparatus, a road side unit (road side unit, RSU), a vehicle-mounted communication processing chip, a wearable device, a terminal device in a 5G network, a terminal device in a future evolved public land mobile network (public land mobile network, PLMN), or the like.

In addition, the terminal device may alternatively be a terminal device in an internet of things (internet of things, IoT) system. IoT is an important part of future information technology development. A main technical feature of IoT is to connect things to a network by using a communication technology, to implement an intelligent network for human-machine interconnection and thing-thing interconnection.

Currently, in a reverse charging process, if the first terminal device 110 serves as a primary device for power supply, the charging circuit module 113 shown in FIG. 3 generally uses a boost (boost) circuit, and the charging circuit module 133 generally uses a buck (buck) circuit. In this case, the battery 114 outputs a power supply voltage (approximately 4 V to 4.5 V) to the charging circuit module 113, the boost circuit in the charging circuit module 113 boosts the power supply voltage output by the battery and transmits a boosted power supply voltage to the charging circuit module 133 through the VBUS, and the buck circuit in the charging circuit module 133 bucks the boosted power supply voltage to a power supply voltage (approximately 4 V to 4.5 V) required by the battery 134 and outputs the power supply voltage to the battery 134. In this way, in the reverse charging process, a voltage output by the first terminal device is increased. For example, the boost circuit may increase the power supply voltage to 5 V or higher. Further, a charging power output by the first terminal device is increased. This increases, to some extent, a speed of charging the second terminal device.

However, due to a limitation of a circuit of the boost circuit and the buck circuit, the charging power output by the first terminal device is generally not higher than 7.5 W. A reason is that the boost circuit and the buck circuit implement a boost process and a buck process by using inductors disposed internally. Due to the existence of the inductors, in the boost process and the buck process, a generated power loss is directly proportional to a square of a difference between an output voltage and an input voltage of the boost circuit and the buck circuit. When the difference between the output voltage and the input voltage is larger, conversion efficiency of the boost circuit and the buck circuit is lower. As a result, the output voltage of the boost circuit and the input voltage of the buck circuit are generally limited to approximately 5 V, causing the charging power to be generally not higher than 7.5 W, which cannot be further increased. In addition, the conversion efficiency is generally lower than 90%. Consequently, in the reverse charging process, the terminal device still has problems of a low charging speed, a large charging loss, and significant heat generation of the device, degrading user experience.

To resolve the problems of the low charging power and the low charging efficiency, this application provides a charging method 400, to increase a charging power of wired reverse charging, improve reverse charging efficiency, and alleviate a problem of heat generation during wired reverse charging. The charging method 400 is used for the first terminal device shown in FIG. 1 to charge the second terminal device, or may be used for the second terminal device to charge the first terminal device. In this specification, an example in which the first terminal device charges the second terminal device is used to describe embodiments. In the charging method 400, the charging circuit in the charging circuit module 113 includes a first switched-capacitor circuit configured to boost a voltage. Optionally, the charging circuit in the charging circuit module 133 may be a buck circuit, or may be a second switched-capacitor circuit configured to buck a voltage. The charging method 400 includes step 410 and step 420.

Step 410: In response to a user selecting a reverse charging mode of the first terminal device, determine that the first terminal device is a primary device that is in an OTG connection and that is configured to provide electric energy.

Step 420: Control the first switched-capacitor circuit to increase a first output voltage of the battery to a second output voltage and output the second output voltage to the wired charging interface, to transmit the second output voltage to the second terminal device through the OTG data cable.

The first switched-capacitor circuit uses a capacitor as an energy storage element to convert a voltage and a current. The switched-capacitor circuit can increase an output voltage (approximately 4 V to 4.5 V) of the battery to N (N≥2) times of the voltage, which is far higher than a 5-V output voltage of the boost circuit, and conversion efficiency can be higher than 97%. Therefore, in the method 400, using the first switched-capacitor circuit for boost can increase a charging power and well resolve a problem of heat generation of the charging circuit module.

Correspondingly, for the second terminal device, when the wired charging interface of the second terminal device receives the multiplied power supply voltage output by the first terminal device, if the charging circuit in the charging circuit module 133 is the second switched-capacitor circuit, the second switched-capacitor circuit performs N-times buck on the power supply voltage obtained through the N-times increase, to obtain a charging voltage required by the battery 134. In this case, because conversion efficiency of the second switched-capacitor circuit can be higher than 97%, a problem of heat generation of the charging circuit module of the second terminal device is also well resolved.

In some other embodiments of this application, for the second terminal device, the charging circuit in the charging circuit module 133 may alternatively be the foregoing buck (buck) circuit.

It should be noted that values of a voltage/current in reverse charging of the terminal device in this application are all examples, and do not constitute a limitation on the protection scope of this application. For example, the first terminal device may provide a 9 V/2 A reverse charging capability, or may provide a 9 V/3 A reverse charging capability. For another example, the first terminal device may alternatively provide a 5 V/1 A or 5 V/1.5 A reverse charging capability by using a boost/buck circuit. In other words, a power at which the first terminal device provides electric energy may be any value.

The following describes the charging circuit module of the first terminal device with reference to specific embodiments.

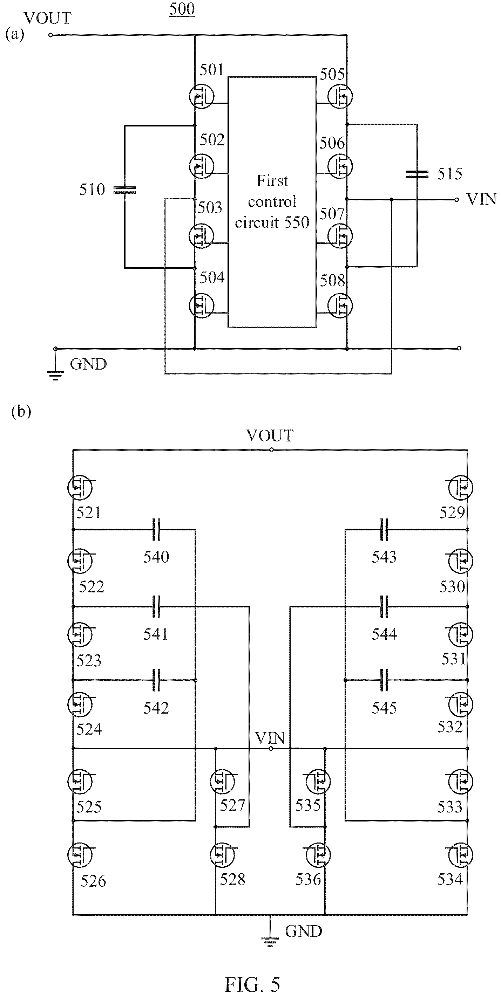

FIG. 5 is a schematic of a first switched-capacitor circuit 500. The first switched-capacitor circuit includes a charge pump circuit and a first control circuit 550. The first control circuit includes a plurality of gate drivers. The plurality of gate drivers are connected to a plurality of transistors in the charge pump circuit, and are configured to provide a drive signal to control a conduction state and a cut-off state of the plurality of transistors, so that the charge pump circuit can halve or multiply an output voltage. The drive signal provided by the first control circuit may be determined by using the control module in FIG. 3, or optionally, the first control circuit may be a part of circuit of the control module.

For example, as shown in (a) in FIG. 5, the first switched-capacitor circuit is a two-phase switched-capacitor circuit or a two-phase charge pump circuit, and includes an input VIN, an output VOUT, a transistor 501 to a transistor 504 that are sequentially connected in series, a transistor 505 to a transistor 508 that are sequentially connected in series, a first capacitor 510, and a first capacitor 515. A difference between phases of drive signals of two branches of the two-phase switched-capacitor circuit is 180°. One of the branches is used as an example. A first end of the transistor 501 is connected to the output VOUT, a connection point between the transistor 501 and the transistor 502 is connected to a first end of the first capacitor 510, a connection point between the transistor 502 and the transistor 503 is connected to the input VIN, and a connection point between the transistor 503 and the transistor 504 is connected to a second end of the first capacitor 510.

In the first switched-capacitor circuit shown in (a) in FIG. 5, a ratio of an output voltage to an input voltage can be 2:1. A principle is as follows: The first switched-capacitor circuit is configured to run in a first phase and a second phase, and a difference between phases of the two branches is 180°. In other words, when a first branch is in the first phase, a second branch is in the second phase, or when the first branch is in the second phase, the second branch is in the first phase.

The first branch is used as an example. In the first phase, the transistor 501 and the transistor 503 are cut off, and the transistor 502 and the transistor 504 are conducted. Because the transistor 502 and the transistor 504 are conducted, a first conductive path is established between the VIN and the first capacitor 510. The first conductive path is formed by the input VIN, the transistor 502, the first capacitor 510, and the transistor 504. A current flows from the VIN to the first capacitor 510 through the first conductive path. In the first phase, the first capacitor 510 is charged to reach a magnitude of a power supply voltage of the VIN, and energy is stored in the first capacitor 510 accordingly.

In the second phase, the transistor 501 and the transistor 503 are conducted, and the transistor 502 and the transistor 504 are cut off. Because the transistor 501 and the transistor 503 are conducted, a second conductive path is established. The second conductive path is formed by the input VIN, the transistor 503, the first capacitor 510, the transistor 501, and the output VOUT. In the second phase, a voltage at two ends of the first capacitor 510 is a power supply voltage at the VIN end, and one end of the first capacitor 510 is connected to the VIN end. Therefore, an output voltage at the VOUT end is double of the power supply voltage at the VIN end.

Therefore, there is no output voltage at the VOUT end when the first branch is in the first phase, an output voltage at the VOUT end is twice an input voltage when the second branch is in the first phase, an output voltage is 0 when the second branch is in the second phase, and an output voltage is twice an input voltage when the first branch is in the second phase. Finally, with a combination of the two branches, an output voltage of the two-phase switched-capacitor circuit shown in (a) in FIG. 5 is twice an input voltage.

Similarly, if the input VIN and the output VOUT in (a) in FIG. 5 are interchanged, the ratio of the output voltage to the input voltage can be 1:2. In other words, a buck process is implemented. In this case, an obtained second switched-capacitor circuit may be used in the charging circuit module 133 of the second terminal device, or may be used in a forward charging process of the charging circuit module 113 of the first terminal device when the first terminal device 110 is a power receiving end.

(b) in FIG. 5 shows another first switched-capacitor circuit. The first switched-capacitor circuit includes 16 transistors: 521 to 536 and six second capacitors: 540 to 545. In the first switched-capacitor circuit shown in (b) in FIG. 5, a ratio of an output voltage to an input voltage can be 4:1. A principle is not described herein. Similarly, when an input VIN and an output VOUT in (b) in FIG. 5 are interchanged and a type of the transistor is replaced, the ratio of the output voltage to the input voltage can be 1:4. In this case, an obtained second switched-capacitor circuit may be used in the charging circuit module 133 of the second terminal device. In addition, the first switched-capacitor circuit shown in (b) in FIG. 5 may also implement 1:2 boost or 2:1 buck by keeping some transistors in a cut-off state.

Similarly, if the input VIN and the output VOUT in (b) in FIG. 5 are interchanged, the ratio of the output voltage to the input voltage can be 1:4. In other words, a buck process is implemented. In this case, an obtained second switched-capacitor circuit may be used in the charging circuit module 133 of the second terminal device, or may be used in a forward charging process of the charging circuit module 113 of the first terminal device when the first terminal device 110 is a power receiving end.

It should be noted that FIG. 5 is merely an example of the first switched-capacitor circuit. The first switched-capacitor circuit may further include more transistors and capacitors, to implement 1:2N boost, where N is any positive integer.

Optionally, in addition to the first switched-capacitor circuit shown in FIG. 5, the charging circuit module may further include a drive circuit for the first switched-capacitor circuit. For example, a control module is used to control a plurality of charge pump sub-circuits to implement soft start of the first switched-capacitor circuit with 1:2 boost or 1:4 boost.

It should be noted that in embodiments of this application, all transistors in FIG. 5 are preferably MOS transistors. In other embodiments, the transistor may alternatively be replaced with another switch element, such as an insulated-gate bipolar transistor (IGBT) device, an integrated gate-commutated thyristor (IGCT) device, a gate turn-off thyristor (GTO) apparatus, a silicon controlled rectifier (SCR) device, a junction field-effect transistor (JFET) device, a MOS-controlled thyristor (MCT) device, a gallium nitride (GaN)-based power device, or a silicon carbide (SiC)-based power device. This is not limited in embodiments of this application.

Optionally, in embodiments of this application, a boost ratio of the first switched-capacitor circuit and a buck ratio of the second switched-capacitor circuit may be determined based on a battery level of the first terminal device or a battery level of the to-be-charged second terminal device. For example, when the battery level of the first terminal device is insufficient, in this application, the boost ratio of the first switched-capacitor circuit may be increased, for example, increased from 1:2 to 1:4, so that the second terminal device maximumly obtains charging electric energy. For another example, when the battery level of the second terminal device is lower than a first battery level threshold, for example, 10%, the boost ratio of the first switched-capacitor circuit may be 1:4 or even higher. In this way, the first terminal device provides a high charging power, and the second terminal device is charged faster. Then, in a charging process of the second terminal device, when the battery level is gradually increased, for example, increased to 50%, the boost ratio of the first switched-capacitor circuit may be reduced, for example, reduced to 1:3; and when the battery level is increased to 70%, the boost ratio of the first switched-capacitor circuit may be further reduced to 1:2. Continuously adjusting the second output voltage and a charging power reduces a charging speed, but can protect a rechargeable battery of the second terminal device to some extent.

Optionally, the first terminal device may set a plurality of charging levels for a reverse charging process of the second terminal device. For example, electric energy obtained by the first switched-capacitor circuit from the battery may change with the battery level of the first terminal device. For example, the first terminal device may set levels such as 9 V/2 A (100%), 8.4 V/2 A (80%), and 8.2 V/2 A (65%). When the battery level of the first terminal device is 100%, an output voltage of the battery is 4.5 V, and the first switched-capacitor circuit may double the output voltage of the battery to 9 V, to output the voltage to the second terminal device. Similarly, when the first battery level is 80%, an output voltage of the battery is 4.2 V, and the first switched-capacitor circuit may double the output voltage of the battery to 8.4 V, to output the voltage to the second terminal device.

It can be learned from the foregoing that, when the input and the output shown in FIG. 5 are interchanged, the first switched-capacitor circuit can switch between buck and boost, or switch between forward charging and reverse charging. In embodiments of this application, a method for switching between forward charging and reverse charging may be switching between buck and boost by using a same first switched-capacitor circuit, or may be disposing a first switched-capacitor circuit and a first integrated circuit used for forward charging, to switch between forward charging and reverse charging by switching between the two charging circuits.

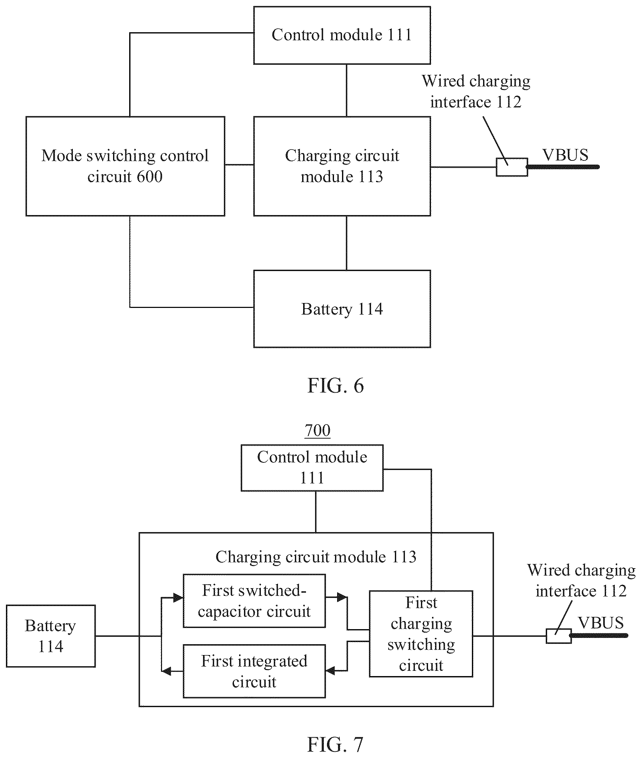

For example, FIG. 6 is a block diagram of a terminal device for implementing buck and boost switching of a same first switched-capacitor circuit. As shown in FIG. 6, the terminal device includes a mode switching control circuit 600, and the mode switching control circuit 600 is connected to another module. The mode switching control circuit 600 is configured to: detect a running mode, a running parameter, or the like of the first terminal device, and determine, based on a detection result, that a working mode of the first switched-capacitor circuit is forward charging or reverse charging.

For example, if a control module 111 detects an operation of selecting a forward charging mode by a user, or detects that an input is connected to an external power supply such as a charger, the control module 111 sends a signal to the mode switching control circuit 600 to inform that the first terminal device is in the forward charging mode and control a battery to be in a charging state. In this case, the mode switching control circuit 600 uses an external power supply connected to a wired charging interface as an input of a charging circuit module 113, and uses a battery 114 as an output of the charging circuit module 113, so that the charging circuit module or the first switched-capacitor circuit in this application is in a buck mode, and bucks a power supply voltage of the external power supply and provides a bucked voltage to the battery.

For another example, if the operation of selecting the reverse charging mode by the user shown in FIG. 2 is detected, or it is detected that the wired charging interface at the input is connected to a secondary device in an OTG connection, the control module 111 sends a signal to the mode switching control circuit 600 to inform that the first terminal device is in the reverse charging mode and control the battery to be in a discharging state. In this case, the mode switching control circuit 600 uses the battery 114 as an input of the charging circuit module 113, and uses an external power supply connected to the wired charging interface or the secondary device as an output of the charging circuit module 113, so that the charging circuit module or the first switched-capacitor circuit in this application is in a boost mode, and boosts a power supply voltage of the battery and provides a boosted voltage to the secondary device.

Optionally, in embodiments of this application, the first switched-capacitor circuit and the first control circuit in FIG. 5 and the mode switching control circuit in FIG. 6 may be integrated into a same switched-capacitor chip. In other words, the charging circuit module is a switched-capacitor chip. In other words, switching between a forward charging working mode and a reverse charging working mode of the switched-capacitor chip is implemented by switching a mode of the mode switching control circuit in the switched-capacitor chip.

For example, FIG. 7 is a diagram of a charging circuit 700 that implements reverse charging and forward charging by using different charging circuits. The charging circuit 700 includes a first switched-capacitor circuit, a first integrated circuit, and a first charging switching circuit. A direction in FIG. 7 indicates a charging direction. To be specific, the first switched-capacitor circuit is configured to perform reverse charging, and the first integrated circuit is configured to perform forward charging on a first terminal device or a battery. The first integrated circuit and the first switched-capacitor circuit are connected in parallel between the battery and a wired charging interface. When reverse charging is required, a control module 111 controls an element such as a switch in the first charging switching circuit, to disconnect the first integrated circuit and connect the first switched-capacitor circuit. Similarly, when forward charging is required, the control module 111 controls an element such as a switch in the first charging switching circuit, to connect the first integrated circuit and disconnect the first switched-capacitor circuit. In embodiments of this application, the first integrated circuit may be a buck circuit, a switched-capacitor circuit or a switched-capacitor chip that is configured to implement buck, or the like.

Optionally, in embodiments of this application, the first switched-capacitor circuit and the first control circuit in FIG. 5, and the first integrated circuit and the first charging switching circuit in FIG. 7 may be integrated into a same switched-capacitor chip. In other words, a charging circuit module 113 is a switched-capacitor chip. In other words, switching between a forward charging working mode and a reverse charging working mode of the switched-capacitor chip is implemented by switching a switch element in the charging switching circuit.

In embodiments of this application, the first terminal device and the second terminal device each may further include a reverse charging protocol module, to determine a reverse charging protocol that matches the first terminal device and the second terminal device. For example, the control module of the first terminal device is connected to the reverse charging protocol module. When the wired charging interface of the first terminal device is connected to the second terminal device through the OTG data cable, the control module obtains a first reverse charging protocol determined by the reverse charging protocol module. When the control module of the second terminal device determines that the reverse charging protocol module of the second terminal device also supports the first reverse charging protocol, the first terminal device may establish a connection to the second terminal device, to implement reverse charging. When the reverse charging protocol module of the second terminal device does not support the first reverse charging protocol, the first terminal device and the second terminal device may implement reverse charging by using another reverse charging protocol. The reverse charging protocol may be a proprietary quick charge QC (quick charge) protocol, a universal BC (battery charging) protocol, a PD (power deliver) protocol, or the like. A charging voltage or a charging power in the QC protocol or the PD protocol is higher than a charging voltage (for example, 5 V described above) or a charging power in the BC protocol.

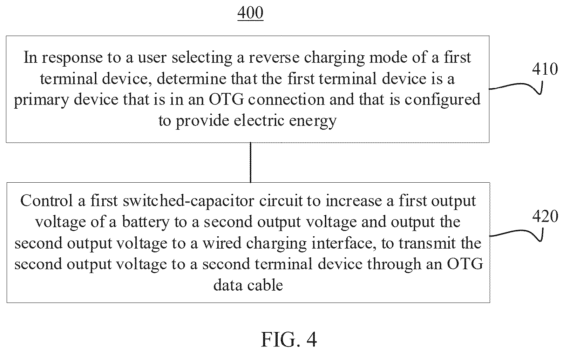

For example, a first charging protocol may be the QC protocol, the PD protocol, or the like, and a second charging protocol may be the BC protocol in which the charging power or the charging voltage is lower than that in the first charging protocol. In this case, the reverse charging protocol module of the first terminal device may send a handshake protocol to the reverse charging protocol module of the second terminal device. If response information of the reverse charging protocol module of the second terminal device indicates that the first charging protocol is supported, a high-power and high-efficiency reverse charging manner in embodiments of this application may be requested, and it is determined that the first terminal device and the second terminal device perform charging by using the first charging protocol. In other words, the first terminal device and/or the second terminal device may implement high-power and high-efficiency reverse charging by using the charging circuit module or the switched-capacitor chip shown in FIG. 4 or FIG. 5. If the response information of the reverse charging protocol module of the second terminal device indicates that the first charging protocol is not supported, it is determined that the first terminal device and the second terminal device perform charging by using the second charging protocol. In this case, the first terminal device and the second terminal device may implement reverse charging by using an original boost/buck circuit.

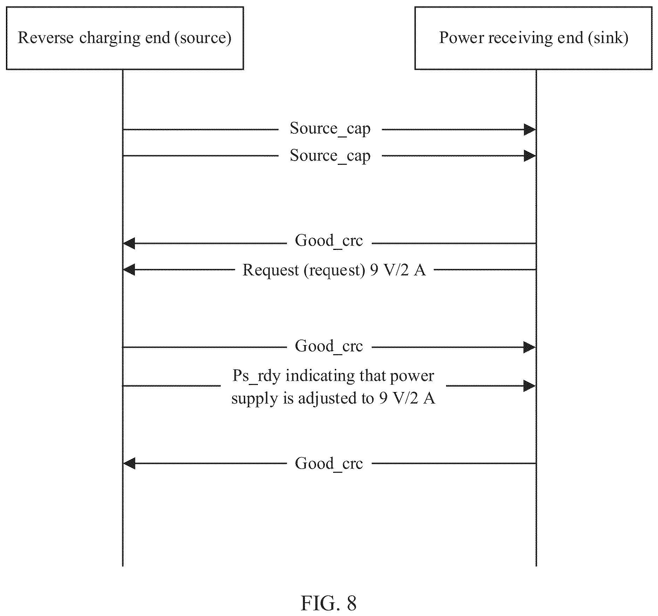

For ease of understanding, FIG. 8 is a diagram in which terminal devices implement a handshake by using a reverse charging protocol. For example, the first terminal device is a reverse charging end (Source) that provides electric energy and the second terminal device is a power receiving end (Sink) that receives electric energy.

As shown in FIG. 8, first, the first terminal device may notify, by using the PD protocol or a proprietary protocol, the second terminal device of a capability of the first terminal device to provide electric energy, for example, send Source_cap to the second terminal device by using the PD protocol. For example, the capability of the first terminal device may be the foregoing levels such as 9 V/2 A (100%), 8.4 V/2 A (80%), and 8.2 V/2 A (65%) of the first terminal device. In other words, when the battery level of the first terminal device is 100%, the first terminal device notifies the second terminal device that a reverse charging capability that can be provided by the first terminal device is 9 V/2 A.

Second, after receiving the capability provided by the first terminal device, the second terminal device requests reverse charging from the first terminal device with reference to a hardware requirement, a charging capability, and the like of the second terminal device. For example, if the second terminal device has the foregoing second switched-capacitor circuit, the second terminal device supports the 9 V/2 A reverse charging capability provided by the first terminal device, and further sends Good_crc to the first terminal device and requests 9 V/2 A reverse charging. For another example, if the second terminal device has the foregoing second switched-capacitor circuit and the battery level is 80%, the second terminal device supports an 8.4 V/2 A reverse charging capability provided by the first terminal device, and further sends Good_crc to the first terminal device and requests 8.4 V/2 A reverse charging. For another example, if the second terminal device has only a boost/buck charging circuit, that is, the second terminal device supports only a 5 V/1.5 A reverse charging capability, the second terminal device sends Good_crc (which may be used to determine whether a peer terminal device receives data information) to the first terminal device and requests 5 V/1.5 A reverse charging.

Then, the first terminal device may indicate to accept the request of the second terminal device, send Good_crc or accept, adjust power supply to a reverse charging capability that can be accepted by the second terminal device, and send Ps_rdy. For example, when the second terminal device can receive the 9 V/2 A reverse charging capability provided by the first terminal device, the first terminal device may adjust power supply to 9 V/2 A, that is, perform reverse charging by using the switched-capacitor circuit. For another example, when the second terminal device can receive the 5 V/1.5 A reverse charging capability provided by the first terminal device, the first terminal device may adjust power supply to 5 V/1.5 A, that is, perform reverse charging by using the boost/buck circuit.

Finally, the second terminal device sends Good_crc, connects a charging circuit inside the second terminal device, and receives electric energy provided by the first terminal device, to implement charging.

It should be noted that in FIG. 8, the PD protocol is used as an example to describe a process of a handshake between the reverse charging end and the power receiving end. This is merely an example. In this application, the process of the handshake may alternatively be implemented by using a proprietary protocol or another reverse charging protocol mentioned above. Selection of a reverse charging protocol is not limited in this application.

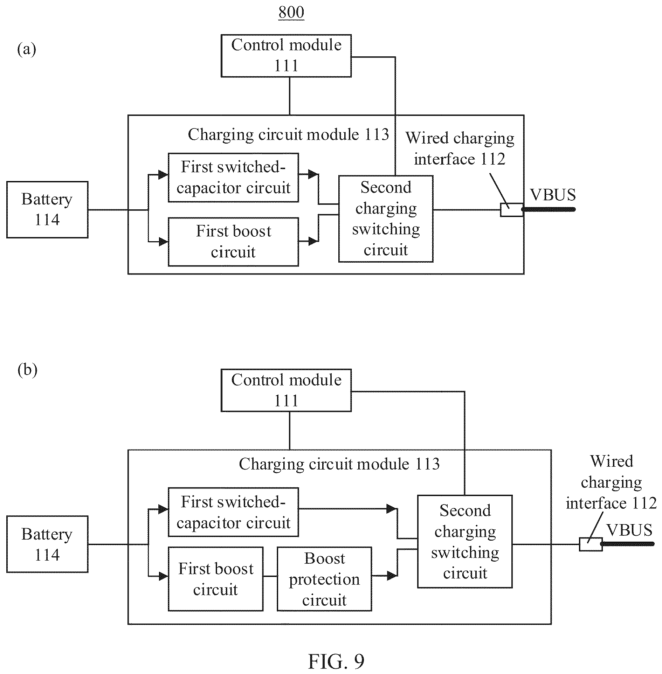

In embodiments of this application, when the response information of the reverse charging protocol module of the second terminal device is not received yet, a boost circuit included in the first terminal device may be configured to perform reverse charging on the second terminal device in advance. FIG. 9 is a block diagram of a charging circuit 800. As shown in (a) in FIG. 9, the charging circuit 800 includes the first switched-capacitor circuit shown in FIG. 5, a first boost circuit, and a second charging switching circuit. During waiting for the response information of the reverse charging protocol module of the second terminal device, the first boost circuit may be used to perform reverse charging on the second terminal device in advance, until the second charging switching circuit shown in (a) in FIG. 9 may be used to switch from an original charging branch including the first boost circuit to a charging branch including the first switched-capacitor circuit when the received response information indicates that the reverse charging protocol module of the second terminal device supports the first charging protocol or a charging voltage of the second terminal device is supported to be the second output voltage in step 420.

Optionally, in a process of switching from the original charging branch including the first boost circuit to the charging branch including the first switched-capacitor circuit, a voltage difference between two ends of the first boost circuit suddenly increases to a voltage difference of the first switched-capacitor circuit, and the boost circuit is in a risk of burning. Therefore, as shown in (b) in FIG. 9, in embodiments of this application, the charging branch including the first boost circuit is further provided with a boost protection circuit. When the first terminal device switches from performing reverse charging by using the first boost circuit to performing reverse charging by using the first switched-capacitor circuit, the boost protection circuit is configured to protect the first boost circuit in a switching process. The boost protection circuit may include any one or more of a metal-oxide-semiconductor MOS field-effect transistor, a diode, a triode, and a resistor. For example, the boost protection circuit may be an over voltage protection (over voltage protection, OVP) circuit or a transient voltage suppressor (transient voltage suppressor, TVS) protection circuit.

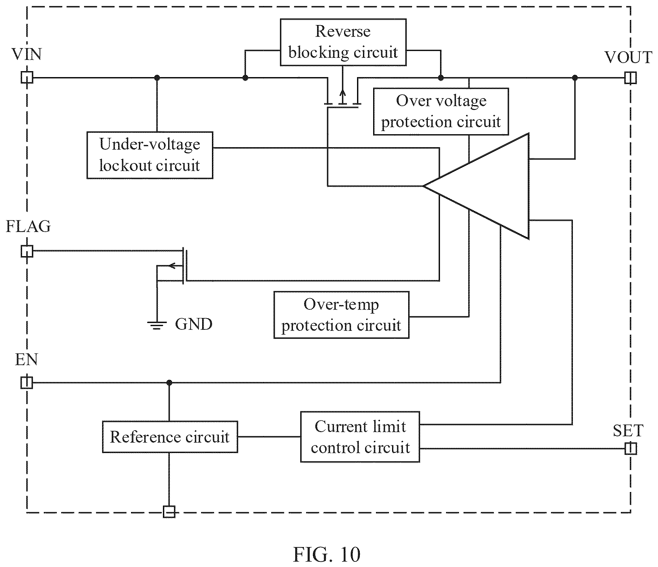

For example, FIG. 10 is a schematic of a boost protection circuit for a first boost circuit. FIG. 10 shows a load switch (load switch), and the load switch may be configured to disconnect or connect a boost/buck circuit.

As shown in FIG. 10, the load switch for the first boost circuit may include an over voltage protection (over voltage protection, OVP) circuit, a reverse blocking (reverse blocking) circuit, an under-voltage lockout (under-voltage lockout) circuit, an over-temp protection (over-temp protection) circuit, a reference (reference) circuit, and a current limit control (current limit control) circuit that are used for boost protection. VIN of the load switch may be connected to an output of the first boost circuit, and a VOUT end may be connected to a VBUS end. The load switch may cause a 5-V voltage output by the first boost circuit after boost to be output to a VBUS port. When the first switched-capacitor circuit is used to perform reverse charging, the load switch may prevent backflow caused by a 9-V voltage output by the first switched-capacitor circuit.

In the reverse blocking circuit, two MOS transistors that are connected head-to-head in series may be used to form a bidirectional switch. In other words, both ends of the reverse blocking circuit may be cut off.

Specifically, for the load switch shown in FIG. 10, when a voltage of the VOUT is 9 V described above or any voltage value higher than a specified comparison voltage (for example, 5.5 V), a voltage of a gate of a PMOS transistor of the reverse blocking circuit shown in FIG. 10 is always set high. In this case, the PMOS transistor is not conducted. In other words, in both a direction from the VIN to the VOUT and a direction from the VOUT to the VIN, a circuit is not connected, and there is no electric leakage. In other words, there is no forward output or reverse input. When the voltage of the VOUT is any voltage value lower than the specified comparison voltage (for example, 5.5 V), the gate of the PMOS transistor of the reverse blocking circuit is pulled to a ground level. In this case, the PMOS transistor is conducted, and the voltage of the VOUT can be normally output. Therefore, the load switch shown in FIG. 10 may be configured to protect the foregoing boost/buck circuit, to prevent backflow caused by a high voltage output by the first switched-capacitor circuit.

The foregoing comparison voltage may be a reference voltage set in an amplification circuit or a comparison amplification circuit in the circuit shown in FIG. 10, and the over voltage protection circuit may detect a voltage of the VOUT and input the voltage to the amplification circuit, for comparison with the comparison voltage or the reference voltage, to control conduction/cut-off of the PMOS transistor connected in the reverse blocking circuit.

Table 1 shows a result of a charging experiment according to an embodiment of this application. In the charging experiment, a same terminal device or the second terminal device shown in FIG. 1 is separately charged by using different methods, to obtain comparison between charging speeds of different charging methods.

**Table 1**

| Charging speed | 10 min | 20 min | 30 min | Total conversion efficiency of a charging circuit |
|---|---|---|---|---|
| 27-W forward charging | 21% | 41% | 58% | / |
| 20-W forward charging | 20% | 40% | 58% | / |
| Existing 7.5-W reverse charging | 8% | 16% | 23% | 77% |
| 10-W shared power bank | 10% | 20% | 30% | 77% |
| 20-W reverse charging in this application | 20% | 32% | 40% | 83% |

It can be learned from Table 1 that, although the charging speed of the reverse charging method in this application is lower than the charging speed of forward charging at 20 min and 30 min, the charging speeds at 10 min are comparable. In comparison with the existing low-power reverse charging method and the shared power bank, the charging speed of the reverse charging method in this application is higher. At 10 min, the charging speed is increased by 150% in comparison with the existing reverse charging method. In addition, in the reverse charging method in this application, the total conversion efficiency of the charging circuit is higher, and is improved by 6%, so that consumption of a charging capacity is reduced by 6%.

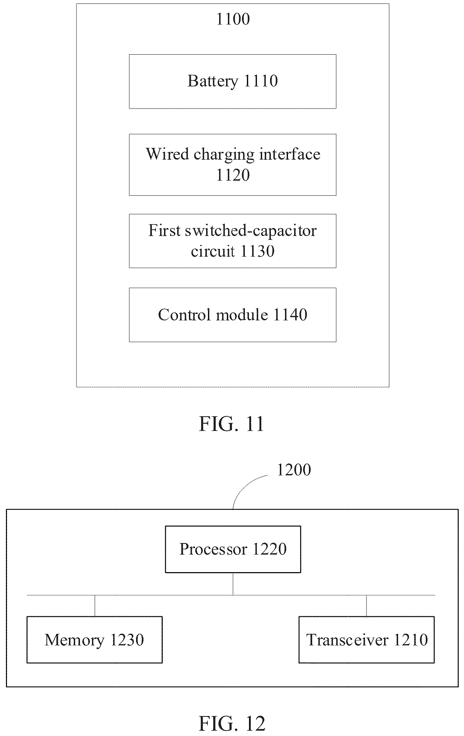

FIG. 11 is a diagram of a terminal device 1100 according to an embodiment of this application.

In some embodiments, the terminal device 1100 includes: a battery 1110; a wired charging interface 1120, where the wired charging interface is connected to another terminal device through an OTG data cable; a first switched-capacitor circuit 1130, where the first switched-capacitor circuit is electrically connected between the battery and the wired charging interface; and a control module 1140, configured to: in response to a user selecting a reverse charging mode of the terminal device, determine that the terminal device is a primary device that is in an OTG connection and that is configured to provide electric energy, and control the first switched-capacitor circuit to increase a first output voltage of the battery to a second output voltage and output the second output voltage to the wired charging interface, to transmit the second output voltage to the another terminal device through the OTG data cable.

In this embodiment of this application, the control module 1140 may be an electronic computing processor. For specific functions and beneficial effects of the control module 1140, refer to the descriptions of the foregoing embodiments. For brevity, details are not described herein again.

FIG. 12 is a block diagram of a terminal device 1200 according to an embodiment of this application. As shown in FIG. 12, the terminal device 1200 includes at least one processor 1220. The processor 1220 is coupled to a memory, and is configured to execute instructions stored in the memory, to send a signal and/or receive a signal. Optionally, the device 1200 further includes a memory 1230, configured to store instructions. Optionally, the device 1200 further includes a transceiver 1210, and the processor 1220 controls the transceiver 1210 to send a signal and/or receive a signal.

It should be understood that the processor 1220 and the memory 1230 may be integrated into one processing apparatus. The processor 1220 is configured to execute program code stored in the memory 1230, to implement the foregoing functions. During specific implementation, the memory 1230 may alternatively be integrated into the processor 1220 or independent of the processor 1220.

It should be further understood that the transceiver 1210 may include a transceiver (or referred to as a receiver machine) and a transmitter (or referred to as a transmitter machine). The transceiver may further include an antenna, and there may be one or more antennas. The transceiver 1210 may alternatively be a communication interface or an interface circuit.

In an implementation process, steps of the foregoing methods may be implemented by using a hardware integrated logic circuit in a processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, steps of the foregoing method embodiments may be implemented by using a hardware integrated logic circuit in a processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps of the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification include but are not limited to these memories and any memory of another proper type.

According to the charging method provided in embodiments of this application, this application further provides a computer program product. The computer program product stores computer program code. When the computer program code is run on a computer, the computer is enabled to perform the charging method in this application.

According to the charging method provided in embodiments of this application, this application further provides a computer-readable medium. The computer-readable medium stores program code. When the program code is run on a computer, the computer is enabled to perform the charging method in this application.

According to the charging method provided in embodiments of this application, this application further provides a system. The system includes the foregoing apparatus or device.

All or some of the foregoing embodiments may be implemented by using software, hardware, firmware, or any combination thereof. When the software is used to implement embodiments, all or some of the embodiments may be implemented in a form of computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disc (solid-state disc, SSD)), or the like.

The network side device and the terminal device in the apparatus embodiments correspond to the network side device or the terminal device in the method embodiments. A corresponding module or unit performs a corresponding step. For example, a communication unit (a transceiver) performs an obtaining step or a sending step in the method embodiments, and a step other than the sending step and the obtaining step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using a signal).

The terms "include", "have", and any variant thereof in the specification, claims, and brief description of drawings of this application are intended to cover a non-exclusive inclusion. The terms "first", "second", and the like in the specification and claims or accompanying drawings of this application are intended to distinguish between different objects but do not indicate a particular order or a primary-secondary relationship.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification generally indicates an "or" relationship between the associated objects, but may also indicate an "and/or" relationship. For details, refer to the context for understanding.

It should be understood that, in embodiments of this application, sequence numbers of the foregoing processes do not mean a performing sequence. The sequence of performing the processes should be determined based on functions and internal logic of the processes, and shall not constitute any limitation on an implementation process of embodiments of this application.

A person of ordinary skill in the art may be aware that, units and algorithm steps in examples described with reference to embodiments disclosed in this specification can be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, wherein the method is used for a first terminal device to charge a second terminal device, the first terminal device comprises a battery, a first switched-capacitor circuit, and a wired charging interface, the first switched-capacitor circuit is electrically connected between the battery and the wired charging interface, the wired charging interface is connected to the second terminal device through an OTG data cable, and the method comprises:
in response to a user selecting a reverse charging mode of the first terminal device, determining that the first terminal device is a primary device that is in an OTG connection and that is configured to provide electric energy; and
controlling the first switched-capacitor circuit to increase a first output voltage of the battery to a second output voltage and output the second output voltage to the wired charging interface, to transmit the second output voltage to the second terminal device through the OTG data cable.

2. The method according to claim 1, wherein the first switched-capacitor circuit comprises a charge pump circuit, the first terminal device further comprises a first control circuit, and the first control circuit is configured to control a conduction/cut-off state of one or more transistors in the charge pump circuit.

3. The method according to claim 1 or 2, wherein the first terminal device further comprises a mode switching control circuit, the mode switching control circuit is configured to switch a working mode of the first switched-capacitor circuit, the working mode of the first switched-capacitor circuit comprises a buck mode or a boost mode, an output of the first switched-capacitor circuit in the buck mode is the battery to implement forward charging, an input of the first switched-capacitor circuit in the boost mode is the battery to implement reverse charging, and controlling the first switched-capacitor circuit to increase the first output voltage of the battery to the second output voltage comprises:
determining that a working status of the battery is a discharging state; and
controlling the mode switching control circuit to determine that an input of the first switched-capacitor circuit is the battery and an output is the wired charging interface, to make the first switched-capacitor circuit switch from the buck mode to the boost mode, to increase the first output voltage of the battery to the second output voltage.

4. The method according to claim 3, wherein the mode switching control circuit and the first switched-capacitor circuit are integrated into a first switched-capacitor chip, and controlling the mode switching control circuit, to make the first switched-capacitor circuit switch from the buck mode to the boost mode comprises:
controlling the mode switching control circuit in the first switched-capacitor chip, to switch a working mode of the first switched-capacitor chip from a forward charging mode to a reverse charging mode, wherein the first switched-capacitor circuit is in the buck mode when the first switched-capacitor chip is in the forward charging mode, and the first switched-capacitor circuit is in the boost mode when the first switched-capacitor chip is in the reverse charging mode.

5. The method according to claim 1 or 2, wherein the first terminal device is further provided with a first charging switching circuit and a first integrated circuit, the first integrated circuit and the first switched-capacitor circuit are connected in parallel between the battery and the wired charging interface, the first charging switching circuit is configured to connect one of the first integrated circuit and the first switched-capacitor circuit and disconnect the other one, the first integrated circuit is configured to perform forward charging on the first terminal device, and after determining that the first terminal device is the primary device that is in the OTG connection and that is configured to provide electric energy, the method further comprises:
controlling the first charging switching circuit to disconnect the first integrated circuit and connect the first switched-capacitor circuit, to make the first terminal device switch from performing forward charging by using the first integrated circuit to performing reverse charging by using the first switched-capacitor circuit.

6. The method according to any one of claims 1 to 5, wherein the first terminal device is further provided with a first boost boost circuit, the first boost circuit and the first switched-capacitor circuit are connected in parallel between the battery and the wired charging interface, and before controlling the first switched-capacitor circuit to increase the first output voltage of the battery to the second output voltage, the method further comprises:
controlling the first boost circuit to increase the first output voltage to a third output voltage and output the third output voltage to the wired charging interface, wherein the third output voltage is lower than the second output voltage; and
controlling the first switched-capacitor circuit to increase the first output voltage of the battery to the second output voltage comprises:
when it is determined that the second terminal device supports a charging voltage to be the second output voltage, controlling the first switched-capacitor circuit to increase the first output voltage of the battery to the second output voltage.

7. The method according to claim 6, wherein the first boost circuit is provided with a boost protection circuit, and when the first terminal device switches from performing reverse charging by using the first boost circuit to performing reverse charging by using the first switched-capacitor circuit, the boost protection circuit is configured to protect the first boost circuit in a switching process.

8. The method according to claim 7, wherein the boost protection circuit comprises any one or more of a metal-oxide-semiconductor MOS field-effect transistor, a diode, a triode, and a resistor.

9. The method according to any one of claims 1 to 8, wherein a ratio of the second output voltage to the first output voltage is any one or more of 4:1, 3:1, and 2:1.

10. The method according to any one of claims 1 to 9, wherein the first terminal device identifies the second terminal device by using any one or more of a power delivery PD protocol, a quick charge QC protocol, and a battery charging BC protocol.

11. The method according to any one of claims 1 to 10, wherein the method further comprises:
obtaining battery level information of the first terminal device or the second terminal device; and
determining the second output voltage based on the battery level information of the first terminal device or the second terminal device.

12. A terminal device, wherein the terminal device comprises:
a battery;
a wired charging interface, wherein the wired charging interface is connected to another terminal device through an OTG data cable;
a first switched-capacitor circuit, wherein the first switched-capacitor circuit is electrically connected between the battery and the wired charging interface; and
a control module, configured to: in response to a user selecting a reverse charging mode of the first terminal device, determine that the first terminal device is a primary device that is in an OTG connection and that is configured to provide electric energy, and control the first switched-capacitor circuit to increase a first output voltage of the battery to a second output voltage and output the second output voltage to the wired charging interface, to transmit the second output voltage to the another terminal device through the OTG data cable.

13. The terminal device according to claim 12, wherein the first switched-capacitor circuit comprises a charge pump circuit, the control module comprises a first control circuit, and the first control circuit is configured to control a conduction/cut-off state of one or more transistors in the charge pump circuit.

14. The terminal device according to claim 12 or 13, wherein the terminal device further comprises:
a mode switching control circuit, wherein the mode switching control circuit is configured to switch a working mode of the first switched-capacitor circuit, the working mode of the first switched-capacitor circuit comprises a buck mode or a boost mode, the first switched-capacitor circuit in the buck mode is configured to output a power supply voltage to the battery to implement forward charging, and the first switched-capacitor circuit in the boost mode is configured to receive a power supply voltage from the battery to implement reverse charging; and
the control module is specifically configured to:
determine that a working status of the battery is a discharging state; and
control the mode switching control circuit to determine that an input of the first switched-capacitor circuit is the battery and an output is the wired charging interface, to make the first switched-capacitor circuit switch from the buck mode to the boost mode, to increase the first output voltage of the battery to the second output voltage.

15. The terminal device according to claim 14, wherein the terminal device comprises:
a first switched-capacitor chip, wherein the first switched-capacitor chip comprises the first switched-capacitor circuit and the mode switching control circuit; and
the control module is specifically configured to:
control the mode switching control circuit in the first switched-capacitor chip, to switch a working mode of the first switched-capacitor chip from a forward charging mode to a reverse charging mode, to make the first switched-capacitor chip increase the first output voltage of the battery to the second output voltage, wherein the first switched-capacitor circuit is in the buck mode when the first switched-capacitor chip is in the forward charging mode, and the first switched-capacitor circuit is in the boost mode when the first switched-capacitor chip is in the reverse charging mode.

16. The terminal device according to claim 12 or 13, wherein the terminal device further comprises:
a first integrated circuit, wherein the first integrated circuit and the first switched-capacitor circuit are connected in parallel between the battery and the wired charging interface, and the first integrated circuit is configured to perform forward charging on the first terminal device; and
a first charging switching circuit, wherein the first charging switching circuit is configured to connect one of the first integrated circuit and the first switched-capacitor circuit; and
the control module is further configured to:
control the first charging switching circuit to disconnect the first integrated circuit and connect the first switched-capacitor circuit, to make the first terminal device switch from performing forward charging by using the first integrated circuit to performing reverse charging by using the first switched-capacitor circuit.

17. The terminal device according to any one of claims 12 to 16, wherein the terminal device further comprises:
a first boost boost circuit, wherein the first boost circuit and the first switched-capacitor circuit are connected in parallel between the battery and the wired charging interface;
before the control module controls the first switched-capacitor circuit to increase the first output voltage of the battery to the second output voltage, the control module is further configured to:
control the first boost circuit to increase the first output voltage to a third output voltage and output the third output voltage to the wired charging interface, wherein the third output voltage is lower than the second output voltage; and
the control module is specifically configured to:
when it is determined that the another terminal device supports a charging voltage to be the second output voltage, control the first switched-capacitor circuit to increase the first output voltage of the battery to the second output voltage.

18. The terminal device according to claim 17, wherein the first boost circuit is provided with a boost protection circuit, and when the terminal device switches from performing reverse charging by using the first boost circuit to performing reverse charging by using the first switched-capacitor circuit, the boost protection circuit is configured to protect the first boost circuit in a switching process.

19. The terminal device according to claim 18, wherein the boost protection circuit comprises any one or more of a metal-oxide-semiconductor MOS field-effect transistor, a diode, a triode, and a resistor.

20. The terminal device according to any one of claims 12 to 19, wherein a ratio of the second output voltage to the first output voltage is any one or more of 4:1, 3:1, and 2:1.

21. The terminal device according to any one of claims 12 to 20, wherein the terminal device identifies the another terminal device by using any one or more of a power delivery PD protocol, a quick charge QC protocol, and a battery charging BC protocol.

22. The terminal device according to any one of claims 12 to 21, wherein the control module is further configured to: obtain battery level information of the terminal device or the another terminal device, and determine the second output voltage based on the battery level information of the terminal device or the another terminal device.

23. A terminal device, comprising:
a processor, a memory, and a transceiver, wherein the memory is configured to store a computer program, and the processor is configured to invoke and run the computer program stored in the memory, to perform the method according to any one of claims 1 to 11.

24. A chip, wherein the chip comprises at least one processor, and when program instructions are executed by the at least one processor, the method according to any one of claims 1 to 11 is performed.

25. A computer-readable storage medium, wherein the computer-readable storage medium stores instructions, and when the instructions are run on a computer, the computer is enabled to perform the method according to any one of claims 1 to 11.

26. A computer program product, comprising computer program instructions, wherein the computer program instructions enable a computer to perform the method according to any one of claims 1 to 11.
